# EUROPEAN PATENT SPECIFICATION

(11) **EP 3 599 045 B1**
(45) Date of publication and mention of the grant of the patent: **06.07.2022**
(21) Application number: 19187764.6
(22) Date of filing: 23.07.2019
(51) Int. Cl.: B23K 9/073, B23K 9/09, B23K 9/10, B23K 9/12, B23K 9/173

(54) **ARC WELDING CONTROL METHOD**
VERFAHREN ZUR STEUERUNG DES LICHTBOGENSCHWEISSENS
PROCÉDÉ DE COMMANDE DE SOUDAGE À L'ARC

(30) Priority: 26.07.2018 JP 2018139885
(43) Date of publication of application: 29.01.2020
(73) Proprietor: DAIHEN Corporation, Osaka-shi, Osaka 532-8512 (JP)
(72) Inventor: TAKADA, Kento, OSAKA, 532-8512 (JP); NAKAMATA, Toshiaki, OSAKA, 532-8512 (JP)
(74) Representative: Boult Wade Tennant LLP

(56) References cited:
- JP-A- 2018 001 270
- JP-A- 2018 008 304
- US-A1- 2012 145 691

## Description

### FIELD

The present disclosure generally relates to an arc welding control method. In particular, the present disclosure relates to a method of controlling arc welding in which use is made of a shield gas containing a certain amount of inert gas.

### BACKGROUND

In a typical consumable electrode arc welding, welding is performed by feeding a welding wire (consumable electrode) at a constant speed and generating an arc between the welding wire and a base material (welding target). In the consumable electrode arc welding, the welding wire and the base material may undergo a welding state where a short-circuit period and an arc period are alternately repeated.

In order to further improve the welding quality, a forward/reverse feeding arc welding method is proposed in which a welding wire is fed in a forward direction and a reverse direction alternately (see JP-A-2018-1270, for example). This arc welding method can stabilize the repetition cycle of short-circuiting and arcing as compared to the conventional method in which the feeding speed is constant, thus improving the welding quality due to a reduction in spatter generation and an improvement in bead appearance.

By the forward/reverse feeding arc welding method, variations in the cycle of the short-circuit period and the arc period may be suppressed, and transfer of droplets may reliably occur during the short-circuit period. However, when use is made of a shield gas (containing an inert gas as the main component) and an average welding current value reaches approximately 250 A or higher, the welding current value will increase during the arc period, causing a droplet to be transferred from the wire to the base material during the arc period. This increases variations in the cycle of the short-circuit period and the arc period, resulting in a droplet being transferred asynchronously with the short-circuit period. Such a phenomenon deteriorates the welding quality. Other examples of arc welding control methods can be found in JP 2018 008304 (which forms the basis for the preamble of claim 1) and US 2012/0145691

### SUMMARY

In view of the above problem, an object of the present disclosure is to provide an arc welding control method that achieves an excellent welding quality, even when a shield gas containing at least 60 vol.% of an inert gas is used and an average welding current value is approximately 250 A or higher. Specifically, the present invention provides and arc welding control method as set out in claim 1.

Preferably, constant voltage control is performed during the large-current arc period.

Preferably, a forward-feeding peak value of the feeding of the welding wire is set to a smaller value in accordance with the increased length of the large-current arc period.

Preferably, when the forward-feeding peak value is set to a smaller value, a reverse-feeding peak value of the feeding of the welding wire is controlled so that an average value of the feeding of the welding wire remains constant.

Further features and advantages of the present disclosure will become apparent from the following detailed description with reference to the attached drawings.

### DRAWINGS

Fig. 1 is a block diagram showing a welding power supply for implementing an arc welding control method according to Embodiment 1 of the present disclosure;
Fig. 2 is a timing chart showing individual signals in the welding power supply of Fig. 1; and
Fig. 3 is a block diagram showing a welding power supply for implementing an arc welding control method according to Embodiment 2 of the present disclosure.

### DETAILED DESCRIPTION

The following describes embodiments of the present disclosure with reference to the accompanying drawings.

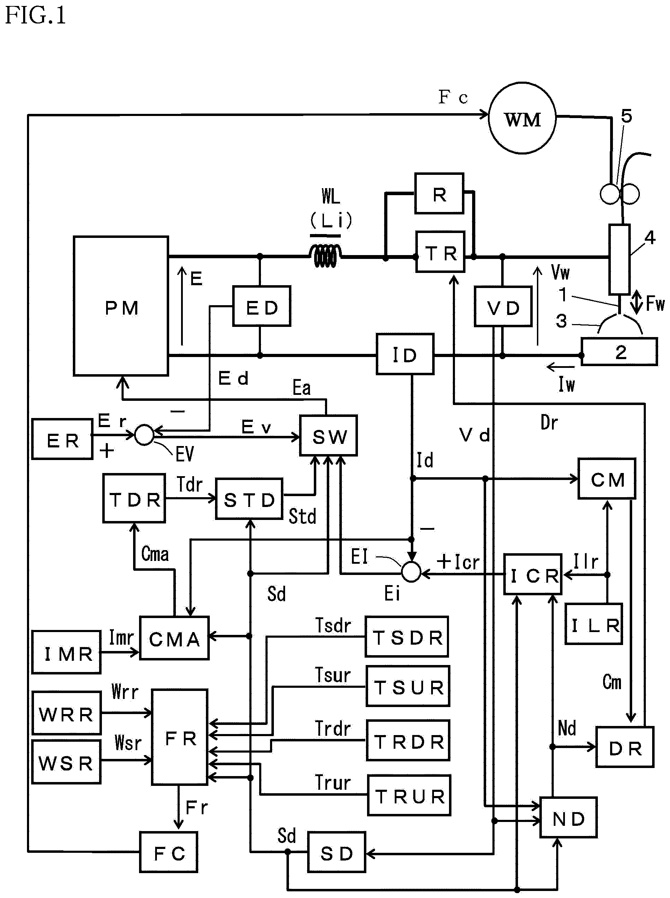

Fig. 1 is a block diagram showing a welding power supply for implementing an arc welding control method according to Embodiment 1 of the present disclosure. The following describes each of the blocks with reference to Fig. 1.

A power main circuit PM receives a power of three-phase 200 V or the like from a commercial power source (not shown), performs output control such as inverter control according to an error amplification signal Ea (described later), and outputs an output voltage E. Although not shown, the power main circuit PM includes a primary rectifier, a smoothing capacitor, an inverter circuit, a high-frequency transformer, and a secondary rectifier. The primary rectifier rectifies the commercial power source and outputs the rectified current or direct current (DC). The smoothing capacitor smoothes the direct current from the primary rectifier. The inverter circuit is driven by the error amplification signal Ea and converts the smoothed DC into a high-frequency AC. The high-frequency transformer lowers the voltage of the high-frequency AC to a value suitable for welding. The secondary rectifier rectifies the low-voltage high-frequency AC to a DC.

A reactor WL smoothes the output voltage E. The reactor WL has an inductance value of 100 µH, for example.

A feeding motor WM receives a feeding control signal Fc (described later), and feeds a welding wire 1 at a feeding speed Fw by alternately repeating forward feeding and reverse feeding. The feeding motor WM has high transient responsiveness. The feeding motor WM may be provided near the tip of a welding torch 4, in order to increase the change rate of the feeding speed Fw of the welding wire 1 and the inversion speed of the feeding direction thereof. Furthermore, two feeding motors WM may be used to build a push-pull feeding system.

The welding wire 1 is fed through the welding torch 4 by the rotation of a feeding roll 5 connected to the feeding motor WM, and an arc 3 is generated between the welding wire 1 and a base material 2. A welding voltage Vw is applied between a power supply chip (not shown) within the welding torch 4 and the base material 2 to cause a flow of a welding current Iw. A shield gas is ejected from the tip of the welding torch 4 to shield the arc 3 from the atmosphere. In the present disclosure, the shield gas chiefly contains an inert gas. Examples of the inert gas include argon gas and helium gas. Examples of an active gas mixed with the inert gas include carbon dioxide gas and oxygen gas. The shield gas chiefly containing an inert gas refers to a shield gas containing at least 60 vol.% of an inert gas, which is according to the present invention.

An output voltage setting circuit ER outputs a predetermined output voltage setting signal Er. An output voltage detection circuit ED detects and smoothes the output voltage E, and outputs an output voltage detection signal Ed.

A voltage error amplification circuit EV receives the output voltage setting signal Er and the output voltage detection signal Ed, amplifies the error between the output voltage setting signal Er (+) and the output voltage detection signal Ed (-), and outputs a voltage error amplification signal Ev.

A current detection circuit ID detects the welding current Iw and outputs a current detection signal Id. A voltage detection circuit VD detects the welding voltage Vw and outputs a voltage detection signal Vd. A short-circuit determination circuit SD receives the voltage detection signal Vd, and outputs a short-circuit determination signal Sd. Specifically, when the value of the voltage detection signal Vd is less than a predetermined short-circuit determination value (approximately 10 V), the short-circuit determination circuit SD determines that the current period is a short-circuit period, and outputs a short-circuit determination signal Sd of High level. When the value of the voltage detection signal Vd is greater than or equal to the predetermined short-circuit determination value, the short-circuit determination circuit SD determines that the current period is an arc period, and outputs a short-circuit determination signal Sd of Low level.

A forward-feeding acceleration period setting circuit TSUR outputs a predetermined forward-feeding acceleration period setting signal Tsur.

A forward-feeding deceleration period setting circuit TSDR outputs a predetermined forward-feeding deceleration period setting signal Tsdr.

A reverse-feeding acceleration period setting circuit TRUR outputs a predetermined reverse-feeding acceleration period setting signal Trur.

A reverse-feeding deceleration period setting circuit TRDR outputs a predetermined reverse-feeding deceleration period setting signal Trdr.

A forward-feeding peak value setting circuit WSR sets a forward-feeding peak reference value in advance, and outputs the value as a forward-feeding peak value setting signal Wsr. The forward-feeding peak reference value is set as a value corresponding to an average feeding speed (average welding current value).

A reverse-feeding peak value setting circuit WRR sets a reverse-feeding peak reference value in advance, and outputs the value as a reverse-feeding peak value setting signal Wrr. The reverse-feeding peak reference value is set as a value corresponding to the average feeding speed (average welding current value).

A feeding speed setting circuit FR receives signals such as the forward-feeding acceleration period setting signal Tsur, the forward-feeding deceleration period setting signal Tsdr, the reverse-feeding acceleration period setting signal Trur, the reverse-feeding deceleration period setting signal Trdr, the forward-feeding peak value setting signal Wsr, the reverse-feeding peak value setting signal Wrr, and the short-circuit determination signal Sd. Then, the feeding speed setting circuit FR generates a feeding speed pattern by the following processing, and outputs the feeding speed pattern as a feeding speed setting signal Fr. When the feeding speed setting signal Fr indicates 0 (zero) or larger, the feeding period is set to a forward-feeding period. When the feeding speed setting signal Fr indicates a value less than zero, the feeding period is set to a reverse-feeding period.
(1) During a forward-feeding acceleration period Tsu determined by the forward-feeding acceleration period setting signal Tsur, the feeding speed setting circuit FR outputs the feeding speed setting signal Fr that linearly increases or accelerates from zero to a forward-feeding peak value Wsp. The forward-feeding peak value Wsp is a positive value determined by the forward-feeding peak value setting signal Wsr.
(2) Then, during a forward-feeding peak period Tsp, the feeding speed setting circuit FR outputs the feeding speed setting signal Fr that maintains the forward-feeding peak value Wsp.
(3) When the short-circuit determination signal Sd changes from Low level (arc period) to High level (short-circuit period), the current period is transitioned to a forward-feeding deceleration period Tsd determined by the forward-feeding deceleration period setting signal Tsdr, and the feeding speed setting circuit FR outputs the feeding speed setting signal Fr that linearly decreases or decelerates from the forward-feeding peak value Wsp to zero.
(4) Next, during a reverse-feeding acceleration period Tru determined by the reverse-feeding acceleration period setting signal Trur, the feeding speed setting circuit FR outputs the feeding speed setting signal Fr that linearly accelerates from zero to a reverse-feeding peak value Wrp. The reverse-feeding peak value Wrp is a negative value determined by the reverse-feeding peak value setting signal Wrr.
(5) Then, during a reverse-feeding peak period Trp, the feeding speed setting circuit FR outputs the feeding speed setting signal Fr that maintains the reverse-feeding peak value Wrp.
(6) When the short-circuit determination signal Sd changes from High level (short-circuit period) to Low level (arc period), the current period is transitioned to a reverse-feeding deceleration period Trd determined by the reverse-feeding deceleration period setting signal Trdr, and the feeding speed setting circuit FR outputs the feeding speed setting signal Fr that linearly decelerates from the reverse-feeding peak value Wrp to zero.
(7) The above steps 1 to 6 are repeated to generate the feeding speed setting signal Fr having a feeding pattern that changes in the form of positive and negative trapezoidal waves.

A feeding control circuit FC receives the feeding speed setting signal Fr, and outputs, to the feeding motor WM, the feeding control signal Fc for feeding the welding wire 1 at the feeding speed Fw corresponding to the value indicated by the feeding speed setting signal Fr.

A current limiting resistor R is inserted between the reactor WL and the welding torch 4. The current limiting resistor R is set to a value (approximately 0.5 to 3 Q) at least 10 times larger than a short-circuit load (approximately 0.01 to 0.03 Ω). When the current limiting resistor R is inserted in the current path, the energy accumulated in the reactor WL and the reactor of an external cable is rapidly discharged.

A transistor TR is connected in parallel to the current limiting resistor R, and is subjected to ON/OFF control according to a drive signal Dr (described later).

A constriction detection circuit ND receives the short-circuit determination signal Sd, the voltage detection signal Vd, and the current detection signal Id, and outputs a constriction detection signal Nd. When the short-circuit determination signal Sd is at High level (short-circuit period) and the voltage rise value of the voltage detection signal Vd reaches a reference value, the constriction detection circuit ND determines that the forming state of a constriction has reached a predetermined reference state, and outputs the constriction detection signal Nd at High level. When the short-circuit determination signal Sd changes to Low level (arc period), the constriction detection circuit ND outputs the constriction detection signal Nd at Low level. As another example, when the differential value of the voltage detection signal Vd during the short-circuit period reaches the corresponding reference value, the constriction detection signal Nd may be changed to High level. As yet another example, the resistance value of a droplet may be calculated by dividing the value of the voltage detection signal Vd by the value of the current detection signal Id, and when the differential value of the resistance value reaches the corresponding reference value, the constriction detection signal Nd may be changed to High level.

A low-level current setting circuit ILR outputs a predetermined low-level current setting signal Ilr. A current comparison circuit CM receives the low-level current setting signal Ilr and the current detection signal Id, and outputs a current comparison signal Cm. The current comparison signal Cm is at High level when Id < Ilr, and is at Low level when Id ≥ Ilr.

A drive circuit DR receives the current comparison signal Cm and the constriction detection signal Nd, and outputs the drive signal Dr to the base of the transistor TR, where the drive signal Dr changes to Low level when the constriction detection signal Nd changes to High level, and then changes to High level when the current comparison signal Cm changes to High level. In this manner, the drive signal Dr becomes Low level upon detection of a constriction. This, in turn, causes the transistor TR to be placed in OFF state, and the current limiting resistor R is inserted in the current path. As a result, the welding current Iw that flows through the short-circuit load rapidly decreases. When the welding current Iw is reduced to the value of the low-level current setting signal Ilr, the drive signal Dr changes to High level and the transistor TR is placed in ON state. As a result, the current limiting resistor R is short-circuited, whereby the normal state is restored.

A current control setting circuit ICR receives the short-circuit determination signal Sd, the low-level current setting signal Ilr, and the constriction detection signal Nd, and performs the following processing to output a current control setting signal Icr.
(1) When the short-circuit determination signal Sd is at Low level (arc period), the current control setting circuit ICR outputs a current control setting signal Icr that becomes the low-level current setting signal Ilr.
(2) When the short-circuit determination signal Sd changes to High level (short-circuit period), the current control setting circuit ICR outputs the current control setting signal Icr that indicates a predetermined initial current setting value during a predetermined initial period. After the initial period, current control setting signal Icr increases from the initial current setting value to a predetermined short-circuit peak setting value with a predetermined short-circuit inclination, and maintains the short-circuit peak setting value.
(3) Thereafter, when the constriction detection signal Nd changes to High level, the current control setting circuit ICR outputs the current control setting signal Icr that indicates the value of the low-level current setting signal Ilr.

A current error amplification circuit EI receives the current control setting signal Icr and the current detection signal Id, amplifies an error between the current control setting signal Icr (+) and the current detection signal Id (-), and outputs a current error amplification signal Ei.

An upper-limit current value setting circuit IMR outputs a predetermined upper-limit current value setting signal Imr. The value of the upper-limit current value setting signal Imr is set to decrease as the volume percentage of the inert gas increases. For example, when the volume percentage of the inert gas is 60%, Imr is set to 450A (Imr = 450A) ; when it is 80%, Imr = 400A; and when it is 100%, Imr = 350A.

An arc current comparison circuit CMA receives the upper-limit current value setting signal Imr, the short-circuit determination signal Sd, and the current detection signal Id, and outputs an arc current comparison signal Cma. The arc current comparison signal Cma is set to High level when the short-circuit determination signal Sd is at Low level (arc period) and Id > Imr, and is reset to Low level when the short-circuit determination signal Sd changes to High level.

A current drop time setting circuit TDR receives the arc current comparison signal Cma, sets a reference value in advance, adds a predetermined increase value (increment) every time the arc current comparison signal Cma changes to High level, and outputs a current drop time setting signal Tdr. The reference value is set to an appropriate value corresponding to the average feeding speed (average welding current value). For example, the reference value is 5 ms, and the increase value is 0.1 ms.

A small-current period circuit STD receives the short-circuit determination signal Sd and the current drop time setting signal Tdr, and outputs a small-current period signal Std. The small-current period signal Std becomes High level when the time determined by the current drop time setting signal Tdr has elapsed from when the short-circuit determination signal Sd changes to Low level (arc period). Thereafter, when the short-circuit determination signal Sd changes to High level (short-circuit period), the small-current period signal Std changes to Low level.

A power characteristic switching circuit SW receives the current error amplification signal Ei, the voltage error amplification signal Ev, the short-circuit determination signal Sd, and the small-current period signal Std, and performs the following processing to output the error amplification signal Ea.
(1) During the period from when the short-circuit determination signal Sd changes to High level (short-circuit period) to when the short-circuit determination signal Sd changes to Low level (arc period) and a predetermined delay period has elapsed thereafter, the power characteristic switching circuit SW outputs the current error amplification signal Ei as the error amplification signal Ea.
(2) During the subsequent large-current arc period, the power characteristic switching circuit SW outputs the voltage error amplification signal Ev as the error amplification signal Ea.
(3) During a subsequent small-current arc period in which the small-current period signal Std becomes High level, the power characteristic switching circuit SW outputs the current error amplification signal Ei as the error amplification signal Ea.

The circuit SW causes the welding power supply to have a constant current characteristic during the short-circuit period, the delay period, and the small-current arc period, and to have a constant voltage characteristic during the remaining period other than these periods, i.e., the large current arc period.

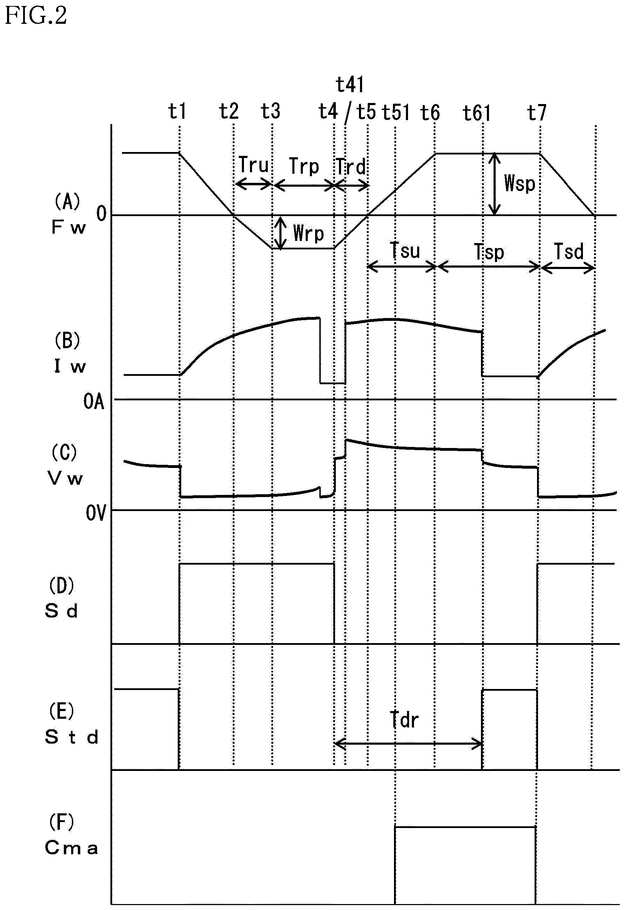

Fig. 2 is a timing chart showing individual signals in the welding power supply of Fig. 1. In Fig. 2, (A) shows the temporal change of the feeding speed Fw, (B) shows the temporal change of the welding current Iw, (C) shows the temporal change of the welding voltage Vw, (D) shows the temporal change of the short-circuit determination signal Sd, (E) shows the temporal change of the small-current period signal Std, and (F) shows the temporal change of the arc current comparison signal Cma. With reference to Fig. 2, the following describes the operations by the respective signals.

The feeding speed Fw shown in (A) of Fig. 2 is controlled by the feeding speed setting signal Fr output from the feeding speed setting circuit FR in Fig. 1. The feeding speed Fw can be divided into several sections that correspond to: the forward-feeding acceleration period Tsu determined by the forward-feeding acceleration period setting signal Tsur; the forward-feeding peak period Tsp that continues until short-circuiting occurs; the forward-feeding deceleration period Tsd determined by the forward-feeding deceleration period setting signal Tsdr; the reverse-feeding acceleration period Tru determined by the reverse-feeding acceleration period setting signal Trur; the reverse-feeding peak period Trp that continues until arcing occurs; and the reverse-feeding deceleration period Trd determined by the reverse-feeding deceleration period setting signal Trdr. The forward-feeding peak value Wsp is determined by the forward-feeding peak value setting signal Wsr, and the reverse-feeding peak value Wrp is determined by the reverse-feeding peak value setting signal Wrr. The feeding speed setting signal Fr has a feeding pattern that changes in the form of positive and negative trapezoidal waves.

### <Operations in Short-Circuit Period from t1 to t4>

When short-circuiting occurs at time t1 in the forward-feeding peak period Tsp, the welding voltage Vw rapidly decreases to a short-circuit voltage value of several volts, as shown in (C) of Fig. 2. This causes the short-circuit determination signal Sd to change to High level (short-circuit period), as shown in (D) of Fig. 2. In response, the feeding speed Fw enters the predetermined forward-feeding deceleration period Tsd from time t1 to t2, and decelerates from the forward-feeding peak value Wsp to zero, as shown (A) of Fig. 2. For example, the forward-feeding deceleration period Tsd is set to 1 ms (Tsd = 1ms).

As shown in (A) of Fig. 2, the feeding speed Fw enters the predetermined reverse-feeding acceleration period Tru from time t2 to t3, and accelerates from zero to the reverse-feeding peak value Wrp. The short-circuit period continues during this period Tru. For example, the reverse-feeding acceleration period Tru is set to 1 ms (Tru = 1 ms).

When the reverse-feeding acceleration period Tru ends at time t3, the feeding speed Fw enters the reverse-feeding peak period Trp and indicates the reverse-feeding peak value Wrp, as shown in (A) of Fig. 2. The reverse-feeding peak period Trp continues until arcing occurs at time t4. Accordingly, the period from time t1 to t4 is a short-circuit period. The reverse-feeding peak period Trp may not be specifically set, but may last approximately 4 ms. The reverse-feeding peak value Wrp may be set to -60 m/min (Wrp = -60 m/min), for example.

Referring to (B) of Fig. 2, the welding current Iw may have a predetermined initial current value during a predetermined initial period (or sub-period) in the short-circuit period from time t1 to t4. Then, the welding current Iw may rise with a predetermined short-circuit inclination (in other words, within a short-circuit inclination period) to reach a predetermined short-circuit peak value, and may maintain (or substantially maintain) the short-circuit peak value temporarily.

As shown in (C) of FIG. 2, the welding voltage Vw will begin to rise at or around the point when the welding current Iw reaches the short-circuit peak value. This is because a constriction is gradually formed on a droplet at the tip of the welding wire 1 due to the reverse feeding of the welding wire 1 and the action of a pinch force by the welding current Iw.

Then, when the voltage value of the welding voltage Vw reaches the reference value, determination is made that the constriction being formed has reached the reference state, and accordingly the constriction detection signal Nd of Fig. 1 changes to High level.

In response to the state where the constriction detection signal Nd indicates High level, the drive signal Dr of Fig. 1 indicates Low level. This causes the transistor TR of Fig. 1 to be placed in OFF state, and the current limiting resistor R of Fig. 1 is inserted in the current path. At the same time, the value of the current control setting signal Icr of Fig. 1 decreases to the value of the low-level current setting signal Ilr. As a result, the value of the welding current Iw decreases sharply or plummets from the short-circuit peak value to a low level current value, as shown in (B) of Fig. 2. When the welding current Iw decreases to the low level current value, the drive signal Dr changes back to High level. This causes the transistor TR to be placed in ON state, and the current limiting resistor R is short-circuited. As shown in (B) of Fig. 2, the welding current Iw maintains the low level current value until a predetermined delay period elapses from the reoccurrence of an arc (t4), since the current control setting signal Icr is still the low-level current setting signal Ilr. Thus, the transistor TR is placed in OFF state only during the period from when the constriction detection signal Nd changes to High level to when the welding current Iw decreases to the low level current value. As shown in (C) of Fig. 2, the welding voltage Vw decreases once and then rapidly rises due to the decrease in the welding current Iw. The parameters described above may be set to have the following values. Initial current = 40 A, Initial period = 0.5 ms, Short-circuit inclination = 2 ms, Short-circuit peak value = 400 A, Low level current value = 50A, and Delay period = 0.5 ms.

### <Operations in Arc Period from t4 to t7>

The reverse feeding of the welding wire and the action of the pinch force by the flow of the welding current Iw cause the constriction to progress and generate an arc at time t4, and accordingly the welding voltage Vw rapidly increases to an arc voltage value of several tens of volts, as shown in (C) of Fig. 2. As a result, the short-circuit determination signal Sd changes to Low level (arc period), as shown in (D) of Fig. 2. In response, the feeding speed Fw enters the predetermined reverse-feeding deceleration period Trd from time t4 to t5, and decelerates from the reverse-feeding peak value Wrp to zero, as shown in (A) of Fig. 2.

When the reverse-feeding deceleration period Trd ends at time t5, the feeding speed Fw enters the forward-feeding acceleration period Tsu from time t5 to t6. During the forward-feeding acceleration period Tsu, the feeding speed Fw accelerates from zero to the forward-feeding peak value Wsp, as shown in (A) of Fig. 2. The arc period continues during this period. The forward-feeding acceleration period Tsu is set to 1 ms (Tsu = 1 ms), for example.

When the forward-feeding acceleration period Tsu ends at time t6, the feeding speed Fw enters the forward-feeding peak period Tsp, and indicates the forward-feeding peak value Wsp, as shown in (A) in Fig. 2. The arc period still continues during this period. The forward-feeding peak period Tsp continues until short-circuiting occurs at time t7. Accordingly, the arc period is the period from time t4 to t7. Then, when short-circuiting occurs, the same operations as those at time t1 onward will be repeated. The forward-feeding peak period Tsp may not be set in advance but is approximately 4 ms. The forward-feeding peak value Wsp is set to 70 m/min (Wsp = 70 m/min), for example.

When arcing occurs at time t4, the welding voltage Vw rapidly increases to an arc voltage value of several tens of volts, as shown in (c) of Fig. 2. On the other hand, the welding current Iw maintains the low level current value during the delay period from time t4 to t41. After time t41, the welding current Iw rapidly increases to the peak value, and then becomes a large current value that gradually decreases. During the large-current arc period from time t41 to t61, the voltage error amplification signal Ev of Fig. 1 performs feedback control for the welding power supply, so that the welding power supply has a constant voltage characteristic. Accordingly, the value of the welding current Iw during the large-current arc period changes with the arc load. As shown in (B) of Fig. 2, the value of the welding current Iw during the large-current arc period is greater than or equal to the predetermined upper-limit current value at time t51. Because of this, the arc current comparison signal Cma changes to High level as shown in (F) of Fig. 2. The arc current comparison signal Cma changes back to Low level when short-circuiting occurs at time t7. The upper-limit current value is set by the upper-limit current value setting signal Imr shown in Fig. 1. As described above, the upper-limit current value decreases as the volume percentage of the inert gas increases.

As shown in (E) of Fig. 2, the small-current period signal Std changes to High level at time t61 when the current drop time determined by the current drop time setting signal Tdr of Fig. 1 elapses from the occurrence of arcing at time t4. In response to this, the welding power supply is switched to have a constant voltage characteristic instead of the constant current characteristic. As a result, the welding current Iw decreases to the low level current value, and maintains the value until time t7 at which short-circuiting occurs. Similarly, the welding voltage Vw also decreases as shown in (C) of Fig. 2. The small-current period signal Std changes back to Low level when short-circuiting occurs at time t7.

As described above, when the arc current comparison signal Cma shown in (F) of Fig. 2 changes to High level at time t51, the value of the current drop time setting signal Tdr of Fig. 1 increases by the predetermined increase value. Accordingly, when the value of the welding current Iw during the large-current arc period is greater than or equal to the value of the upper-limit current value setting signal Imr of Fig. 1, the value of the current drop time setting signal Tdr increases, resulting in the large-current arc period becoming longer. When the length of the large-current arc period increases, the maximum value of the welding current Iw decreases during the large-current arc period in the next cycle. This operation is repeated until the value of the welding current Iw during the large-current arc period becomes less than the value of the upper-limit current value setting signal Imr.

In the consumable electrode arc welding using a shield gas that chiefly contains an inert gas, a droplet is transferred by spray transfer when the welding current value is greater than or equal to a critical value. Accordingly, in the conventional technique, if the welding current value becomes greater than or equal to the critical value during the large-current arc period, a droplet is transferred during this period. This increases variations in the repetition cycle of the short-circuit period and the arc period, resulting in a droplet being transferred asynchronously with the short-circuit period, which ends up causing a deterioration of the welding quality. In the conventional technique, the above phenomenon occurs when an average welding current value is approximately 250 A or higher.

On the other hand, in the present embodiment, the upper-limit current value is set to a value approximating the aforementioned critical value. Also, the length of the large-current arc period is controlled such that the welding current value during the large-current arc period does not become greater than or equal to the upper-limit current value. Hence, the present embodiment can prevent the occurrence of droplet transfer during the large-current arc period, thus allowing the droplet transfer to occur in synchronization with the short-circuit period. As a result, variations in the repetition cycle of the short-circuit period and the arc period can be prevented to obtain an excellent welding quality. The upper-limit current value is decreased as the volume percentage of the inert gas increases. This is because the reference value for spray transfer decreases as the percentage of the inert gas increases.

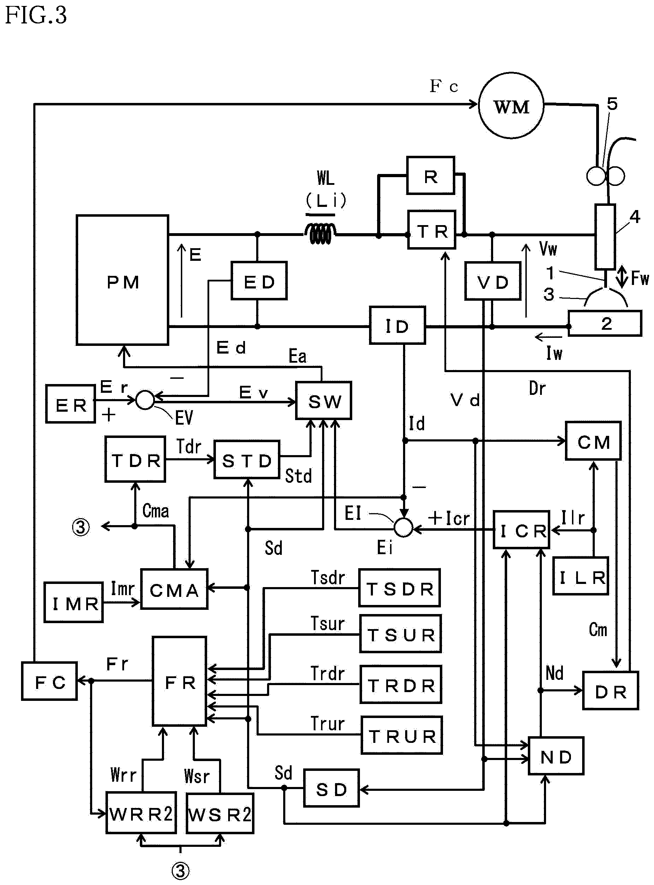

Referring now to Fig. 3, Embodiment 2 will be described below. Generally, Embodiment 2 may be characterized by decreasing the forward-feeding peak value when the length of the large-current arc period is increased, as noted above with Embodiment 1.

Fig. 3 is a block diagram showing a welding power supply for implementing an arc welding control method according to Embodiment 2. In Fig. 3, generally corresponding to Fig. 1, blocks identical to those in Fig. 1 are indicated by same reference signs, and descriptions thereof are omitted to avoid repetition. Note that, in Fig. 3, the forward-feeding peak value setting circuit WSR in Fig. 1 is replaced with a second forward-feeding peak value setting circuit WSR2, and the reverse-feeding peak value setting circuit WRR in Fig. 1 is replaced with a second reverse-feeding peak value setting circuit WRR2. Hereinafter these replacements will be described with reference to Fig. 3.

The second forward-feeding peak value setting circuit WSR2 receives the arc current comparison signal Cma, and sets a forward-feeding peak reference value in advance. Then, the second forward-feeding peak value setting circuit WSR2 subtracts a predetermined value ("forward-feeding peak decrease value") from the forward-feeding peak reference value every time the arc current comparison signal Cma changes to High level, and outputs the resulting forward-feeding peak value setting signal Wsr. The forward-feeding peak decrease value may be set to 1.0 m/min, for example.

The second reverse-feeding peak value setting circuit WRR2 receives the arc current comparison signal Cma and the feeding speed setting signal Fr, and sets a reverse-feeding peak reference value in advance. Then, the second reverse-feeding peak value setting circuit WRR2 calculates an average feeding speed based on the feeding speed setting signal Fr every time the arc current comparison signal Cma changes to High level. Further, the second reverse-feeding peak value setting circuit WRR2 adjusts the preset reverse-feeding peak reference value so that the average feeding speed does not change (i.e., remains constant), and outputs the adjusted value as a reverse-feeding peak value setting signal Wrr.

The timing chart of the signals depicted in Fig. 3 is omitted because it is substantially similar to that in Fig. 2, except that the time of current drop becomes longer every time the arc current comparison signal Cma (see (F) of Fig. 2) changes to High level, and that the forward-feeding peak value Wsp becomes smaller in accordance with the elongation of the current drop time. As another difference, the reverse-feeding peak value Wrp becomes smaller in accordance with the above-noted variation of the current drop time (hence the forward-feeding peak value Wsp) so as to keep the average feeding speed constant.

In Embodiment 2, when control is performed to increase the length of the large-current arc period by increasing the length of the current drop time, control is performed to decrease the forward-feeding peak value. When the forward-feeding peak value decreases, the length of the arc period increases. This makes it possible to keep the length of the small-current arc period (t61 to t7 in Fig. 2) constant even if the current drop time becomes longer. If the small-current arc period were short, short-circuiting would occur before the welding current drops to the low level current value, and then a large amount of spattering would be generated. Maintaining the small-current arc period at an appropriate length can prevent the generation of spattering.

Furthermore, in Embodiment 2, when control is performed to decrease the forward-feeding peak value, control is performed on the reverse-feeding peak value such that the average of the feeding value remains constant, which is advantageous to stabilizing the state of welding.

## Claims

1. An arc welding control method comprising:
feeding a welding wire (1) in a forward direction and a reverse direction alternately; and
repeating a short-circuit period (t1-t4) and an arc period (t4-t7), wherein:
the arc period (t4-t7) includes a large-current arc period (t41-t61) and a small-current arc period (t61-t7), and **characterized in that**
the method uses: a shield gas containing at least 60 vol.% of an inert gas; and an average welding current of 250 A or higher; and **in that**
the method further comprises increasing a length of the large-current arc period (t41-t61) when a value of a welding current (Iw) during the large-current arc period (t41-t61) is not smaller than a predetermined upper-limit current value, and wherein
the upper-limit current value is set tc a smaller value in accordance with an increase of the volume percentage of the inert gas.

2. The method according to claim 1, wherein constant voltage control is performed during the large-current arc period (t41-t61).

3. The method according to claim 1 or 2, wherein a forward-feeding peak value (Wsp) of the feeding of the welding wire (1) is set to a smaller value in accordance with the increased length of the large-current arc period (t41-t61) .

4. The method according to claim 3, wherein when the forward-feeding peak value (Wsp) is set to a smaller value, a reverse-feeding peak value (Wrp) of the feeding of the welding wire (1) is controlled so that an average value of the feeding of the welding wire (1) remains constant.

## Patentansprüche

1. Verfahren zur Steuerung von Lichtbogenschweißen, umfassend:
Zuführen eines Schweißdrahtes (1) abwechselnd in Vorwärts- und Rückwärtsrichtung; und
Wiederholung einer Kurzschlussperiode (t1-t4) und einer Lichtbogenperiode (t4-t7), wobei:
die Lichtbogenperiode (t4-t7) eine Großstrom-Lichtbogenperiode (t41-t61) und eine Kleinstrom-Lichtbogenperiode (t61-t7) umfasst,
und **dadurch gekennzeichnet, dass**
das Verfahren verwendet: ein Schutzgas, das mindestens 60 Vol.-% eines Inertgases enthält; und einen durchschnittlichen Schweißstrom von 250 A oder höher; und dadurch, dass
das Verfahren ferner das Erhöhen einer Länge der Großstrom-Lichtbogenperiode (t41-t61) umfasst, wenn ein Wert eines Schweißstroms (Iw) während der Großstrom-Lichtbogenperiode (t41-t61) nicht kleiner als ein vorbestimmter oberer Grenzstromwert ist, und wobei der obere Grenzstromwert entsprechend einer Erhöhung des Volumenprozentsatzes des Inertgases auf einen kleineren Wert eingestellt wird.

2. Verfahren nach Anspruch 1, wobei Konstantspannungsregelung während der Großstrom-Lichtbogenperiode (t41-t61) durchgeführt wird.

3. Verfahren nach Anspruch 1 oder 2, wobei ein Vorwärts-Zuführ-Spitzenwert (Wsp) des Zuführens des Schweißdrahtes (1) entsprechend der erhöhten Länge der Großstrom-Lichtbogenperiode (t41-t61) auf einen kleineren Wert eingestellt wird.

4. Verfahren nach Anspruch 3, wobei, wenn der Vorwärts-Zuführ-Spitzenwert (Wsp) auf einen kleineren Wert eingestellt wird, ein Rückwärts-Zuführ-Spitzenwert (Wrp) des Zuführens des Schweißdrahtes (1) so gesteuert wird, dass ein Durchschnittswert des Zuführens des Schweißdrahtes (1) konstant bleibt.

## Revendications

1. Procédé de contrôle de soudage à l'arc comprenant :
l'introduction d'un fil de soudage (1) dans une direction avant et une direction arrière de manière alternée ; et
la répétition d'une période de court-circuit (t1-t4) et d'une période d'arc (t4-t7), dans lequel :
la période d'arc (t4-t7) inclut une période d'arc à courant élevé (t41-t61) et une période d'arc à courant faible (t61-t7), et **caractérisé en ce que** le procédé utilise : un gaz de protection contenant au moins 60 % en volume d'un gaz inerte ; et un courant de soudage moyen de 250 A ou supérieur ; et **en ce que**
le procédé comprend de plus l'augmentation d'une longueur de la période d'arc à courant élevé (t41-t61) lorsqu'une valeur d'un courant de soudage (Iw) pendant la période d'arc à courant élevé (t41-t61) n'est pas inférieure à une valeur de courant limite supérieure prédéterminée, et dans lequel
la valeur de courant limite supérieure est fixée à une valeur inférieure selon une augmentation du pourcentage en volume du gaz inerte.

2. Procédé selon la revendication 1, dans lequel le contrôle à tension constante est réalisé pendant la période d'arc à courant élevé (t41-t61).

3. Procédé selon la revendication 1 ou 2, dans lequel une valeur de pic d'introduction avant (Wsp) de l'introduction du fil de soudage (1) est fixée à une valeur inférieure selon la longueur supérieure de la période d'arc à courant élevé (t41-t61).

4. Procédé selon la revendication 3, dans lequel lorsque la valeur de pic d'introduction avant (Wsp) est fixée à une valeur inférieure, une valeur de pic d'introduction arrière (Wrp) de l'introduction du fil de soudage (1) est contrôlée de sorte qu'une valeur moyenne de l'introduction du fil de soudage (1) reste constante.
